# FASCICULE DE BREVET EUROPEEN

(11) **EP 3 638 523 B1**
(45) Date de publication et mention de la délivrance du brevet: **19.05.2021**
(21) Numéro de dépôt: 18735644.9
(22) Date de dépôt: 23.05.2018
(51) Int. Cl.: B60G 21/055

(54) **DISPOSITIF ANTI-DÉVERS À MOYENS DE COUPLAGE PILOTÉS, POUR UN TRAIN DE VÉHICULE AUTOMOBILE**
ANTIROLLVORRICHTUNG MIT GESTEUERTER KUPPLUNGSVORRICHTUNG FÜR EINE FAHRZEUGACHSENANORDNUNG
ANTI-ROLL DEVICE WITH CONTROLLED COUPLING MEANS FOR A MOTOR VEHICLE AXLE ASSEMBLY

(30) Priorité: 14.06.2017 FR 1755356
(43) Date de publication de la demande: 22.04.2020
(73) Titulaire: PSA Automobiles SA, 78300 Poissy (FR); BWI France S.A.S.U., 95700 Roissy-en-France (FR)
(72) Inventeur: CAVAREC, Alan, 78350 Les Loges en Josas (FR); GERMAIN, Philippe, 94120 Fontenay-Sous-Bois (FR); PERR E, Bruno, 75017 Paris (FR)
(86) Numéro de dépôt international: PCT/FR2018/051224
(87) Numéro de publication internationale: WO 2018/229376

(56) Documents cités:
- FR-A1- 2 670 716
- FR-A1- 2 786 133
- JP-A- H0 263 914
- JP-U- S6 340 214
- US-A- 5 788 031

## Description

L'invention concerne les dispositifs anti-dévers (ou anti-roulis ou encore de stabilisation) qui équipent certains véhicules automobiles.

Un dispositif anti-dévers (ou anti-roulis ou encore de stabilisation) est un équipement comprenant une barre dont les extrémités opposées sont couplées respectivement à des roues droite et gauche d'un train d'un véhicule (automobile) via deux biellettes. Il est principalement sollicité lorsque le véhicule roule dans un virage ou sur une voie de circulation qui est dégradée de façon dissymétrique par rapport à son axe longitudinal. Dans le cas d'un virage, la barre est sollicitée en torsion et en flexion pour maintenir autant que possible l'assiette du véhicule, et donc plus sa raideur est élevée plus elle est utile. Dans le cas d'une dégradation, la barre transmet partiellement l'irrégularité de la voie de circulation subie par l'une des roues d'un train à l'autre roue de ce même train par un phénomène de « renvoi de roulis », et donc plus sa raideur est élevée plus elle induit une dégradation du confort.

Des dispositif anti-dévers sont par exemple connues des documents US5788031A et JPS6340214U. JPS6340214U divulgue notamment les caractéristiques du préambule de la revendication 1.

Afin de faire varier la dégradation de confort induit par le dispositif anti-dévers en fonction des situations de vie rencontrées, il a été proposé dans le document brevet US 8,167,319 d'adjoindre à chaque biellette un vérin hydraulique couplé à un circuit fluidique comportant une électrovanne, des clapets anti-retour et un réservoir de fluide pour la compensation. Chaque circuit fluidique est relativement peu complexe, mais la présence de deux circuits fluidiques augmente l'encombrement global et le prix.

De plus, dans la solution décrite dans le paragraphe précédent, lorsque le véhicule comprend deux trains de roues, on se retrouve avec quatre électrovannes. Or, plus le nombre d'électrovannes est élevé, plus le risque de panne ou de dysfonctionnement est élevé et plus la consommation électrique est élevée. En outre, plus le nombre d'électrovannes est élevé, plus on doit prévoir de faisceaux électriques pour alimenter en courant et en commandes ces électrovannes, et donc plus on augmente les coûts de fabrication et d'installation et la complexification de l'installation dans le véhicule et des algorithmes de génération des commandes des électrovannes.

L'invention a donc notamment pour but d'améliorer la situation.

Elle propose notamment à cet effet un dispositif anti-dévers, destiné à équiper un train de véhicule automobile ayant des roues droite et gauche, et comprenant une barre couplée à ces roues droite et gauche via deux biellettes.

Ce dispositif anti-dévers se caractérise par le fait qu'il comprend des moyens de couplage faisant partiellement partie de la barre et comportant :
- un carter définissant une chambre subdivisée en des première et seconde parties de volumes variables par un piston, et comprenant des première et seconde entrées-sorties communiquant respectivement avec ces première et seconde parties et une entrée-sortie intermédiaire communiquant avec la première partie et/ou la seconde partie selon la position du piston,
- un réservoir de fluide placé à une extrémité d'un conduit ayant une autre extrémité couplée à l'entrée-sortie intermédiaire,
- des premier et second moyens anti-retour couplés chacun à l'une des première et seconde entrées-sorties et au conduit, et
- une électrovanne couplée aux première et seconde entrées-sorties et placée soit dans un état ouvert assurant une liaison entre les première et seconde parties et le réservoir de fluide via l'entrée-sortie intermédiaire, soit dans un état fermé n'autorisant une évacuation de fluide hors de la chambre que par l'entrée-sortie intermédiaire, en fonction d'une commande reçue.

Grâce à l'utilisation d'un circuit fluidique ne comprenant qu'une seule électrovanne, deux moyens anti-retours et un réservoir de fluide (pour la compensation), on réduit la complexité, l'encombrement, la consommation électrique et le coût du dispositif anti-dévers, on simplifie l'installation de ce dernier et l'algorithme de génération de commande, et on diminue le risque de panne ou de dysfonctionnement.

Le dispositif anti-dévers selon l'invention peut comporter d'autres caractéristiques qui peuvent être prises séparément ou en combinaison, et notamment :
- le piston peut comprendre un bord périphérique ayant une épaisseur strictement inférieure à une dimension correspondante de l'entrée-sortie intermédiaire ; 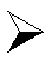 le bord périphérique du piston peut loger partiellement un joint d'étanchéité ayant une épaisseur strictement inférieure à la dimension correspondante de l'entrée-sortie intermédiaire ;
- dans un premier mode de réalisation, l'une des biellettes peut comprendre les carter et piston et constituer une biellette de longueur variable et pilotée par la commande reçue, et l'autre biellette peut présenter une longueur fixe ;
- dans un second mode de réalisation, la barre peut comprendre des premier et second bras comportant chacun une première extrémité couplée à l'une des biellettes et une seconde extrémité couplée au carter ou au piston des moyens de couplage ; 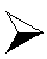 son carter et son piston peuvent définir un vérin à palette ou un vérin à vis ;
- il peut comprendre des moyens de contrôle plaçant l'électrovanne dans son état ouvert ou fermé selon la commande reçue.

L'invention propose également un véhicule, éventuellement de type automobile, et comprenant au moins un train comportant des roues droite et gauche couplées via un dispositif anti-dévers du type de celui présenté ci-avant.

D'autres caractéristiques et avantages de l'invention apparaîtront à l'examen de la description détaillée ci-après, et des dessins annexés, sur lesquels :
- la figure 1 illustre schématiquement et fonctionnellement, dans une vue en perspective, un premier exemple de réalisation d'un dispositif anti-dévers ne faisant pas partie de l'invention, avant son couplage à un train d'un véhicule automobile,
- la figure 2 illustre schématiquement et fonctionnellement, dans une vue en coupe, un exemple de réalisation de moyens de couplage d'un dispositif anti-dévers selon l'invention, et
- la figure 3 illustre schématiquement et fonctionnellement, dans une vue en perspective, un second exemple de réalisation d'un dispositif anti-dévers selon l'invention, avant son couplage à un train d'un véhicule automobile.

L'invention a notamment pour but de proposer un dispositif anti-dévers (ou anti-roulis ou encore de stabilisation) DA destiné à équiper un train d'un véhicule automobile.

Dans ce qui suit, on considère, à titre d'exemple non limitatif, que le véhicule automobile est une voiture. Mais l'invention n'est pas limitée à ce type de véhicule automobile. Elle concerne en effet tout type de véhicule automobile comprenant au moins un train de roues devant être équipé d'un dispositif anti-dévers.

Par ailleurs, on considère dans ce qui suit, à titre d'exemple non limitatif, que le train est destiné à être installé dans une partie avant d'un véhicule automobile. Mais l'invention concerne également les trains arrière de véhicule automobile.

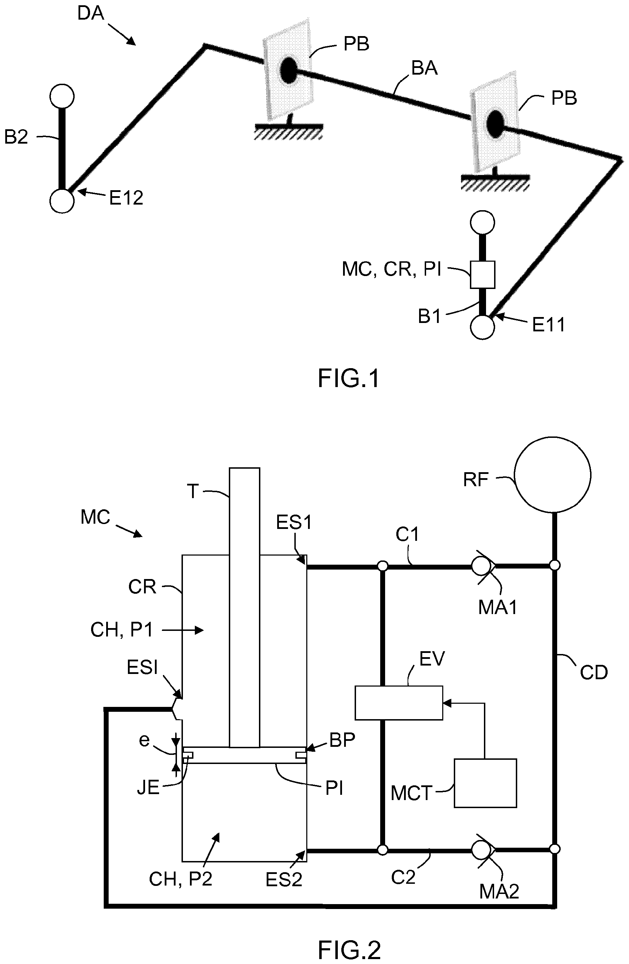

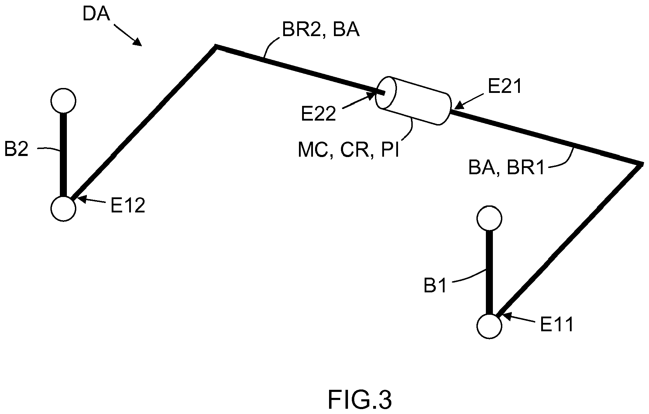

On a schématiquement représenté sur les figures 1 et 3 deux exemples de réalisation d'un dispositif anti-dévers DA, destiné à équiper un train de roues d'un véhicule automobile (ici une voiture).

Comme illustré, un dispositif anti-dévers DA, selon l'invention, comprend au moins une barre anti-dévers BA, des première B1 et seconde B2 biellettes, et des moyens de couplage MC.

La barre (anti-dévers) BA est couplée à des roues droite et gauche d'un train d'un véhicule automobile, via les première B1 et seconde B2 biellettes. Elle est par ailleurs couplée à la caisse du véhicule, par exemple via des paliers PB, comme illustré non limitativement sur la figure 1.

Dans les deux exemples illustrés non limitativement sur les figures 1 et 3, la barre (anti-dévers) BA présente une forme générale en U. Mais cela n'est pas obligatoire.

Dans le premier exemple illustré non limitativement sur la figure 1, la barre (anti-dévers) BA est monobloc. Elle comprend donc deux extrémités E1j (j = 1 ou 2) opposées et couplées respectivement aux roues droite et gauche d'un train via les première B1 et seconde B2 biellettes. Le couplage biellette Bj / extrémité E1j peut se faire par une liaison rotule ou pivot, par exemple.

En revanche, dans le second exemple illustré non limitativement sur la figure 3, la barre (anti-dévers) BA comprend des premier BR1 et second BR2 bras qui sont indépendants l'un de l'autre, et comprennent chacun des première E1j et seconde E2j extrémités. Chaque première extrémité E1j est couplée à l'une des roues droite et gauche d'un train via l'une des biellettes Bj. Le couplage biellette Bj / première extrémité E1j peut se faire par une liaison rotule ou pivot, par exemple. Les secondes extrémités E2j sont couplées aux moyens de couplage MC.

On notera que dans les deux exemples illustrés non limitativement sur les figures 1 et 3, la valeur 1 de l'indice j désigne le côté droit, tandis que la valeur 2 de l'indice j désigne le côté gauche. Mais l'inverse est possible.

Les moyens de couplage MC font partiellement partie soit de la barre BA, comme illustré sur la figure 3, soit de l'une des biellettes Bj, comme illustré sur la figure 1.

Ces moyens de couplage MC comportent un carter CR, un piston PI, un réservoir de fluide RF, des premier MA1 et second MA2 moyens anti-retour et une électrovanne EV, comme illustré non limitativement sur la figure 2.

Le carter CR définit une chambre CH qui est subdivisée en des première P1 et seconde P2 parties de volumes variables par un piston PI solidaire fixement d'une tige T. De plus, le carter CR comprend une première entrée-sortie ES1 qui communique avec la première partie P1 de la chambre CH, une seconde entrée-sortie ES2 qui communique avec la seconde partie P2 de la chambre CH et une entrée-sortie intermédiaire ESI qui communique avec la première partie P1 et/ou la seconde partie P2 de la chambre CH selon la position du piston PI.

Le carter CR et le piston PI (avec sa tige T) définissent une espèce de vérin à trois entrées-sorties ES1, ES2 et ESI.

Dans le premier exemple illustré non limitativement sur la figure 1, le carter CR est solidarisé fixement à une partie inférieure de la première biellette B1, et l'extrémité de la tige T qui est opposée au piston PI est solidarisée fixement à une partie supérieure de la première biellette B1. En revanche, dans l'invention illustré non limitativement sur la figure 3, le carter CR est solidarisé fixement à la seconde extrémité E21 du premier bras BR1, et l'extrémité de la tige T qui est opposée au piston PI est solidarisée fixement à la seconde extrémité E22 du second bras BR2. Un agencement inversé est également possible.

On notera que le carter CR peut, par exemple, présenter une forme cylindrique circulaire.

On notera également que dans le premier exemple illustré non limitativement sur la figure 1, le carter CR et le piston PI peuvent définir un vérin classique du fait qu'ils permettent une variation, par translation du piston PI avec sa tige T, de la longueur (ou hauteur) de la (première) biellette B1 lorsque cette dernière (B1) réagit aux sollicitations du train. En d'autres termes, l'une des biellettes Bj (ici B1) constitue une biellette de longueur variable et pilotée par une commande, et l'autre biellette Bj' (ici B2) présente une longueur fixe et donc est tout à fait classique.

En revanche, dans le second exemple illustré non limitativement sur la figure 3, le carter CR et le piston PI peuvent définir un vérin à palette ou un vérin à vis, par exemple, du fait qu'ils permettent une variation, par une combinaison d'une rotation et d'une translation du piston PI avec sa tige T, de la rotation relative du premier bras BR1 par rapport au second bras BR2. En d'autres termes, l'une des deux parties Pj (par exemple P1) constitue une « chambre stator » tandis que l'autre partie (par exemple P2) constitue une « chambre rotor ». Les deux biellettes Bj présentent donc, ici, une longueur fixe. Elles (Bj) sont donc classiques et dépourvues des moyens de couplage MC.

Le réservoir de fluide RF est placé à une extrémité d'un conduit CD qui a une autre extrémité couplée à l'entrée-sortie intermédiaire ESI du carter CR (et donc de la chambre CH). Il est destiné à assurer un rôle de compensateur de fluide. En fait, il compense les variations de volume liées au mouvement de la tige T ainsi que les variations liées à la température. Le fluide peut, par exemple, être une huile. Ainsi, il pourra par exemple s'agir d'une huile hydraulique ou d'une huile d'amortisseur.

On notera que le réservoir de fluide RF peut être séparé de la chambre CH par un piston flottant. Il doit pouvoir être isolé des première P1 et seconde P2 parties de la chambre CH pour un bon fonctionnement en mode bloqué.

Les premier MA1 et second MA2 moyens anti-retour sont couplés chacun à l'une des première ES1 et seconde ES2 entrées-sorties et au conduit CD. Le premier moyen anti-retour MA1 fait partie d'un premier conduit C1 qui communique avec la première entrée-sortie ES1 et le conduit CD. Le second moyen anti-retour MA2 fait partie d'un second conduit C2 qui communique avec la seconde entrée-sortie ES2 et le conduit CD.

Par exemple, ces premier MA1 et second MA2 moyens anti-retour peuvent être agencés sous la forme de clapets anti-retour. Mais cela n'est pas obligatoire. En effet, ce qui est important c'est qu'ils permettent chacun une circulation de fluide selon un unique sens (ici du réservoir de fluide RF vers une entrée-sortie ES1 ou ES2), mais pas selon le sens inverse (à savoir ici d'une entrée-sortie ES1 ou ES2 vers le réservoir de fluide RF).

L'électrovanne EV est couplée aux première ES1 et seconde ES2 entrées-sorties et placée soit dans un état ouvert, soit dans un état fermé, en fonction d'une commande reçue. Les moyens de couplage MC sont donc ainsi pilotés par la commande que reçoit son électrovanne EV.

L'électrovanne communique par exemple avec des parties intermédiaires respectives des premier C1 et second C2 conduits, situées entre le carter CR et les premier MA1 et second MA2 moyens anti-retour.

On notera que dans une variante de réalisation non illustrée l'électrovanne EV pourrait faire partie du piston PI. Une telle variante de réalisation est bien connue de l'homme de l'art.

Dans l'état ouvert l'électrovanne EV assure une liaison entre les première P1 et seconde P2 parties et le réservoir de fluide RF via l'entrée-sortie intermédiaire ESI.

Les première P1 et seconde P2 parties de la chambre CH étant reliées entre elles et l'une d'entre elles étant toujours reliée au réservoir de fluide (ou compensation) RF via l'entrée-sortie intermédiaire ESI et le conduit CD, ces première P1 et seconde P2 parties sont donc reliées à la compensation. Il en résulte, dans le cas du premier exemple illustré sur la figure 1, que la longueur (ou hauteur) de la première biellette B1 peut varier librement.

Dans l'état fermé l'électrovanne EV n'autorise une évacuation de fluide hors de la chambre CH que par l'entrée-sortie intermédiaire ESI.

En effet, les premier MA1 et second MA2 moyens anti-retour empêchent tous les deux la circulation de fluide des première ES1 et seconde ES2 entrées-sorties vers le réservoir de fluide RF, et donc l'évacuation du fluide hors de la chambre CH n'est possible que par l'entrée-sortie intermédiaire ESI. Il en résulte, dans le cas du premier exemple illustré sur la figure 1, que la longueur (ou hauteur) de la première biellette B1 ne peut pas varier librement. C'est un fonctionnement similaire à celui d'un cliquet hydraulique et qui permet d'avoir une position à l'équilibre à mi-course lorsque le piston PI est au niveau de l'entrée-sortie intermédiaire ESI.

On notera que le réservoir de fluide RF et/ou les premier MA1 et second MA2 moyens anti-retour et/ou l'électrovanne EV et/ou le conduit CD et/ou les premier C1 et second C2 conduits peu(ven)t être externe(s) au carter CR définissant la chambre CH, comme illustré sur la figure 2, ou bien peu(ven)t être logés dans un éventuel autre carter dans lequel est également logé le carter CR définissant la chambre CH.

Il est également important de noter que du fluide doit pouvoir entrer ou sortir de la chambre CH quelle que soit la position du piston PI dans cette dernière (CH). Pour ce faire, le piston PI peut, comme illustré non limitativement sur la figure 2, comprendre un bord périphérique BP ayant une épaisseur e strictement inférieure à une dimension correspondante de l'entrée-sortie intermédiaire ESI. En variante, l'entrée-sortie intermédiaire ESI peut comporter deux sous-parties distantes d'une valeur supérieure à l'épaisseur e du piston PI.

Par ailleurs, il est préférable que le bord périphérique BP du piston PI loge partiellement un joint d'étanchéité JE ayant une épaisseur strictement inférieure à la dimension correspondante de l'entrée-sortie intermédiaire ESI. Cela permet d'éviter que le joint JE obstrue complètement l'entrée-sortie intermédiaire ESI lorsque le piston PI est à mi-course.

On notera que la connexion hydraulique à mi-course (c'est-à-dire au niveau de l'entrée-sortie intermédiaire ESI) est dimensionnée pour éviter l'extrusion du joint JE du piston PI.

La commande reçue qui permet de placer l'électrovanne EV dans son état ouvert (ou passant) ou dans son état fermé (ou non passant) provient de moyens de contrôle MCT. Cette commande peut, par exemple, être déterminée en fonction d'irrégularités détectées sous le véhicule par un capteur de paramètre physique (tel qu'un accéléromètre) et/ou d'une fin de virage détectée devant le véhicule par des moyens d'observation ou par un système de guidage par satellites et/ou de la vitesse en cours du véhicule. Ces moyens de contrôle MCT peuvent éventuellement faire partie du dispositif anti-dévers DA. Par exemple, ils peuvent faire partie d'un calculateur du véhicule et être chargés de déterminer en temps réel et de façon dynamique, chaque commande.

On notera que lorsque le véhicule automobile comprend deux trains, chacun d'entre eux peut être équipé d'un dispositif anti-dévers DA selon l'invention.

L'invention offre plusieurs avantages, parmi lesquels :
- une réduction de la complexité, de l'encombrement, de la consommation électrique et du coût du dispositif anti-dévers du fait de l'utilisation d'une seule électrovanne par train de roues,
- une simplification de l'installation du dispositif anti-dévers et de l'algorithme de génération de commande du fait de l'utilisation d'une seule électrovanne par train de roues et donc d'un seul faisceau électrique d'alimentation et de contrôle,
- une diminution du risque de panne ou de dysfonctionnement du fait de l'utilisation d'une seule électrovanne par train de roues.

## Revendications

1. Dispositif anti-dévers (DA) pour un train d'un véhicule automobile, ledit dispositif (DA) comprenant une barre (BA) couplée à des roues droite et gauche dudit train via deux biellettes (B1, B2), **caractérisé en ce qu'**il comprend des moyens de couplage (MC) faisant partiellement partie de ladite barre (BA) et comportant i) un carter (CR) définissant une chambre (CH) subdivisée en des première (P1) et seconde (P2) parties de volumes variables par un piston (PI), et comprenant des première (ES1) et seconde (ES2) entrées-sorties communiquant respectivement avec lesdites première (P1) et seconde (P2) parties et une entrée-sortie intermédiaire (ESI) communiquant avec ladite première partie (P1) et/ou ladite seconde partie (P2) selon la position dudit piston (PI), ii) un réservoir de fluide (RF) placé à une extrémité d'un conduit (CD) ayant une autre extrémité couplée à ladite entrée-sortie intermédiaire (ESI), iii) des premier (MA1) et second (MA2) moyens anti-retour couplés chacun à l'une desdites première (ES1) et seconde (ES2) entrées-sorties et audit conduit (CD), et iv) une électrovanne (EV) couplée auxdites première (ES1) et seconde (ES2) entrées-sorties et placée soit dans un état ouvert assurant une liaison entre lesdites première (P1) et seconde (P2) parties et ledit réservoir de fluide (RF) via ladite entrée-sortie intermédiaire (ESI), soit dans un état fermé n'autorisant une évacuation de fluide hors de ladite chambre (CH) que par ladite entrée-sortie intermédiaire (ESI), en fonction d'une commande reçue.

2. Dispositif selon la revendication 1, **caractérisé en ce que** ledit piston (PI) comprend un bord périphérique (BP) ayant une épaisseur strictement inférieure à une dimension correspondante de ladite entrée-sortie intermédiaire (ESI).

3. Dispositif selon la revendication 2, **caractérisé en ce que** ledit bord périphérique (BP) du piston (PI) loge partiellement un joint d'étanchéité ayant une épaisseur strictement inférieure à ladite dimension correspondante de l'entrée-sortie intermédiaire (ESI).

4. Dispositif selon l'une des revendications 1 à 3, **caractérisé en ce que** l'une desdites biellettes (B1) comprend lesdits carter (CR) et piston (PI) et constitue une biellette de longueur variable et pilotée par ladite commande, et l'autre biellette (B2) présente une longueur fixe.

5. Dispositif selon l'une des revendications 1 à 3, **caractérisé en ce que** ladite barre (BA) comprend des premier (BR1) et second (BR2) bras comportant chacun une première extrémité (E11, E12) couplée à l'une desdites biellettes (B1, B2) et une seconde extrémité (E21, E22) couplée audit carter (CR) ou audit piston (PI) des moyens de couplage (MC).

6. Dispositif selon la revendication 5, **caractérisé en ce que** lesdits carter (CR) et piston (PI) définissent un vérin à palette ou un vérin à vis.

7. Dispositif selon l'une des revendications 1 à 6, **caractérisé en ce qu'**il comprend des moyens de contrôle (MCT) propres à générer ladite commande à destination de ladite électrovanne (EV).

8. Véhicule comprenant au moins un train comportant des roues droite et gauche, **caractérisé en ce qu'**il comprend en outre au moins un dispositif anti-dévers (DA) selon l'une des revendications précédentes, et couplé auxdites roues droite et gauche de ce train.

9. Véhicule selon la revendication 8, **caractérisé en ce qu'**il est de type automobile.

## Patentansprüche

1. Anti-Roll-Vorrichtung (DA) für einen Zug eines Kraftfahrzeugs, wobei die Vorrichtung (DA) eine Stange (BA) umfasst, die über zwei Verbindungen (B1, B2), die **dadurch gekennzeichnet** sind, mit dem rechten und dem linken Rad des Zuges verbunden ist dass es Kopplungsmittel (MC) umfasst, die teilweise einen Teil der Stange (BA) bilden und i) ein Gehäuse (CR) umfassen, das eine Kammer (CH) definiert, die in erste (P1) und zweite (P2) Teile von Volumina unterteilt ist, die durch einen Kolben variabel sind (PI) und umfasst erste (ES1) und zweite (ES2) Eingänge-Ausgänge, die jeweils mit dem ersten (P1) und zweiten (P2) Teil kommunizieren, und einen Zwischen-Eingangs-Ausgang (ESI), der mit dem ersten Teil (P1) und kommuniziert / oder der zweite Teil (P2) in Abhängigkeit von der Position des Kolbens (PI), ii) eines Fluidreservoirs (RF), das an einem Ende einer Leitung (CD) angeordnet ist, wobei ein anderes Ende mit dem Einlass-Zwischenausgang (ESI) gekoppelt ist, iii) der ersten (MA1) und zweiten (MA2) Rückschlageinrichtung, die jeweils mit einer gekoppelt sind von den ersten (ES1) und zweiten (ES2) Eingängen-Ausgängen und der Leitung (CD) und iv) einem Magnetventil (EV), das mit den ersten (ES1) und zweiten (ES2) Eingängen-Ausgängen gekoppelt und entweder in einem angeordnet ist offener Zustand, der eine Verbindung zwischen dem ersten (P1) und dem zweiten (P2) Teil und dem Fluidreservoir (RF) über den dazwischenliegenden Eingangs-Ausgang (ESI) sicherstellt, entweder in einem geschlossenen Zustand, der keine Evakuierung von Fluid aus der Kammer erlaubt (CH) als durch die Zwischen Eingabe-Ausgabe (ESI), abhängig von einem empfangenen Befehl..

2. Vorrichtung nach Anspruch 1, **dadurch gekennzeichnet, dass** der Kolben (PI), eine Umfangskante (BP) mit einer Dicke aufweist, die strikt geringer ist als eine entsprechende Abmessung des Zwischeneinlass-Auslasses (ESI).

3. Vorrichtung nach Anspruch 2, **dadurch gekennzeichnet, dass** die Umfangskante (BP) des Kolbens (PIS) teilweise eine Dichtung aufnimmt Dicke weniger streng aufweist als die entsprechende Abmessung des Zwischeneinlass-Auslasses (ESI).

4. Vorrichtung nach einem der Ansprüche 1 bis 3, **dadurch gekennzeichnet, dass** eines der Glieder (B1) das Gehäuse (CR) und den Kolben (PI) umfasst und ein Glied variabler Länge darstellt und von der Steuerung gesteuert wird, und das andere Glied (B2) hat eine feste Länge.

5. Vorrichtung nach einem der Ansprüche 1 bis 3, **dadurch gekennzeichnet, dass** der Stab (BA) einen ersten (BR1) und einen zweiten (BR2) Arm umfasst, die jeweils ein erstes Ende (E11, E12) umfassen, das mit einer der Verbindungsstangen (B1) gekoppelt ist (B2) und ein zweites Ende (E21, E22), das mit dem Gehäuse (CR) oder mit dem Kolben (PI) der Kupplungseinrichtung (MC) gekoppelt ist.

6. Vorrichtung nach Anspruch 5, **dadurch gekennzeichnet, dass** das Gehäuse (CR) und der Kolben (PI) einen Palettenheber oder einen Spindelhubwagen definieren.

7. Vorrichtung nach einem der Ansprüche 1 bis 6, **gekennzeichnet dadurch, dass** sie Steuermittel (MCT) umfasst, die zum Erzeugen des Befehls an das Magnetventil (EV) geeignet sind.

8. Fahrzeug mit mindestens einem Zug, der rechte und linke Räder umfasst, **dadurch gekennzeichnet, dass** es ferner mindestens eine Anti-Roll-Vorrichtung (DA) gemäß einem der vorhergehenden Ansprüche umfasst und mit den rechten und linken Rädern dieses Zuges verbunden ist.

9. Fahrzeug nach Anspruch 8, **dadurch gekennzeichnet, dass** es sich um einen Kraftfahrzeugtyp handelt.

## Claims

1. Anti-roll device (DA) for a train of a motor vehicle, said device (DA) comprising a bar (BA) coupled to the right and left wheels of said train via two links (B1, B2), **characterized in that** that it comprises coupling means (MC) partially forming part of said bar (BA) and comprising i) a casing (CR) defining a chamber (CH) subdivided into first (P1) and second (P2) parts of volumes variable by a piston (PI), and comprising first (ES1) and second (ES2) inputs-outputs communicating respectively with said first (P1) and second (P2) parts and an intermediate input-output (ESI) communicating with said first part (P1) and / or said second part (P2) depending on the position of said piston (PI), ii) a fluid reservoir (RF) placed at one end of a conduit (CD) having another end coupled to said inlet -intermediate output (ESI), iii) of the first (MA1) and second (MA2) non-return means each coupled to one of said first (ES1) and second (ES2) inputs-outputs and said conduit (CD), and iv) a solenoid valve (EV) coupled to said first (ES1) and second (ES2) inputs-outputs and placed either in an open state ensuring a connection between said first (P1) and second (P2) parts and said fluid reservoir (RF) via said intermediate input-output (ESI), either in a closed state not allowing an evacuation of fluid out of said chamber (CH) than by said intermediate input-output (ESI), depending on a command received.

2. Device according to claim 1, **characterized in that** said piston (PI) comprises a peripheral edge (BP) having a thickness strictly less than a corresponding dimension of said intermediate inlet-outlet (ESI).

3. Device according to claim 2, **characterized in that** said peripheral edge (BP) of the piston (PI) partially accommodates a seal having a thickness strictly less than said corresponding dimension of the intermediate inlet-outlet (ESI).

4. Device according to one of claims 1 to 3, **characterized in that** one of said links (B1) comprises said housing (CR) and piston (PI) and constitutes a link of variable length and driven by said control, and the other link (B2) has a fixed length.

5. Device according to one of claims 1 to 3, **characterized in that** said bar (BA) comprises first (BR1) and second (BR2) arms each comprising a first end (E11, E12) coupled to one of said connecting rods (B1, B2) and a second end (E21, E22) coupled to said housing (CR) or to said piston (PI) of the coupling means (MC).

6. Device according to claim 5, **characterized in that** said housing (CR) and piston (PI) define a pallet jack or a jack screw.

7. Device according to one of claims 1 to 6, **characterized in that** it comprises control means (MCT) suitable for generating said command to said solenoid valve (EV).

8. Vehicle comprising at least one train comprising right and left wheels, **characterized in that** it further comprises at least one anti-roll device (DA) according to one of the preceding claims, and coupled to said right and left wheels of this train.

9. Vehicle according to claim 8, **characterized in that** it is of the automotive type.
